# EUROPÄISCHE PATENTANMELDUNG

(11) **EP 1 901 049 A1**
(43) Veröffentlichungstag der Anmeldung: **19.03.2008**
(21) Anmeldenummer: 06019308.3
(22) Anmeldetag: 15.09.2006
(51) Int. Cl.: G01L 9/00, G01L 19/00

(54) **Sensoranordnung**

(71) Anmelder: Carl Freudenberg KG, 69469 Weinheim (DE)
(72) Erfinder: Lauer, Frank, 69168 Wiesloch (DE); Röhner, Gerhard, 69502 Hemsbach (DE)

(57) **Zusammenfassung**

Sensoranordnung (1) mit einem Formteil (2) zum Verbinden von Maschinenelementen, umfassend einen Tragkörper (3) der eine Durchbrechung (4) zum Durchführen von Medien aufweist und eine erste Ausnehmung (5) die auf zumindest einer Stirnseite (6) des Tragkörpers (3) angeordnet ist und die mit einer Dichtung (7) versehen ist sowie einem Messwertübertrager (8) und einer Auswerteeinheit (9), wobei der Messwertübertrager (8) in der Durchbrechung (4) und die Auswerteeinheit (9) außerhalb des Formteils (2) angeordnet ist.

## Beschreibung

### Technisches Gebiet

Die Erfindung betrifft eine Sensoranordnung mit einem Formteil zum fluiddichten Verbinden von Maschinenelementen, umfassend einen Tragkörper der eine Durchbrechung zum Durchführen von Medien aufweist und eine erste Ausnehmung die auf zumindest einer Stirnseite des Tragkörpers angeordnet ist und die mit einer Dichtung versehen ist sowie einem Messwertübertrager und eine Auswerteeinheit.

### Stand der Technik

Derartige Sensoranordnungen die in Formteile eingebettet sind werden an Stellen eingesetzt an dem medienführende Aggregate miteinander verbunden werden. Die Sensoranordnung ermöglicht die Erfassung von Zustandsparametern des abzudichtenden Mediums. Der Tragkörper des Formteils wird meist im Spritzgießverfahren hergestellt und besteht aus einem thermoplastischen Werkstoff. Der Tragkörper ist mit Ausnehmungen versehen in denen ein dichtend wirkendes Elastomer angeordnet wird. Hierbei ist nachteilig, dass thermoplastische Werkstoffe nach dem Spritzgießen schrumpfen und dass die Werkstoffe der Sensoranordnung und des Tragkörpers unterschiedliche Ausdehnungskoeffizienten aufweisen, so dass sich Leckagen zwischen Sensoranordnung und Tragkörper ergeben können. Des Weiteren können sich auch kapillare Leckagen ergeben.

### Darstellung der Erfindung

Der Erfindung liegt die Aufgabe zugrunde, eine Sensoranordnung mit einem Formteil mit einer dauerhaft dichten Durchführung bereitzustellen.

Diese Aufgabe wird mit den Merkmalen von Anspruch 1 gelöst. Auf vorteilhafte Ausgestaltungen nehmen die Unteransprüche Bezug.

Zur Lösung der Aufgabe sind der Messwertübertrager in der Durchbrechung und die Auswerteeirrheit außerhalb des Formteils angeordnet. Dadurch erfolgt eine Trennung der Funktionen Messwert aufnehmen und Messwert auswerten. Sensoren und Auswerteeinheiten sind häufig empfindlich gegenüber hohen Drücken und Temperaturen und können daher aufgrund der während eines Spritzgießprozesses vorherrschenden Drücke und Temperaturen beschädigt werden. Bei der erfindungsgemäßen Anordnung wird eine hydraulische oder auch eine mechanische Übertragungseinrichtung in den Tragkörper eingebettet. Die Signalübertragungseinrichtungen, meist Leiter oder Rohre sind unempfindlich gegenüber hohen Drücke und Temperaturen, so dass diese problemlos in einem Spritzgießprozess in dem Tragkörper eingebettet werden können. Der Messwertübertrager überträgt den zu bestimmenden Medienparameter nach außerhalb und die eigentliche Messung erfolgt durch einen außerhalb des Tragkörpers angeordneten Sensor,

Die Sensoranordnung kann als Drucksensor ausgebildet sein. Drucksensoren sind im Gegensatz zu Temperatursensoren aufwendiger und empfindlicher gegenüber hohen Temperaturen. Bei der erfindungsgemäßen Anordnung sind die empfindlichen Bauelemente wie Sensor und Auswerteeinheit außerhalb des Formteils angeordnet.

Der Messwertübertrager kann als Druckmembran ausgebildet sein, der über eine in dem Formteil eingebettete Medienleitung mit der Auswerteeinheit hydraulisch verbunden ist. Dabei erfolgt eine Übertragung des Drucks mittels einer hydraulischen Flüssigkeit, beispielsweise einem Silikonöl nach außerhalb. Die Verbindung erfolgt dabei über ein Rohr, beispielsweise ein Kupferrohr mit einem kleinen Durchmesser. Dieses Rohr ist in dem Tragkörper eingebettet und ist aufgrund fehlender mechanischer oder elektronischer Bauteile besonders robust. Die eigentliche Messung des Druckes erfolgt indirekt durch Messung des Drucks der hydraulischen Flüssigkeit außerhalb des Tragkörpers durch den Sensor in Verbindung mit der Auswerteeinheit statt.

Der Tragkörper kann eine zweite Ausnehmung aufweisen, wobei die Sensoranordnung abschnittsweise in der zweiten Ausnehmung angeordnet ist und wobei die weitere Ausnehmung mit einer zweiten Dichtung versehen ist. Vorzugsweise ist die Signalübertragungseinrichtung, beispielsweise das Rohr, der Sensoranordnung in der zweiten Ausnehmung angeordnet. Die weitere Dichtung umgibt dabei die in der zweiten Ausnehmung angeordnete Signalübertragungseinrichtung. Als Dichtungsmaterial kommt ein elastomerer Werkstoff wie FKM oder NBR in Frage, der die unterschiedlichen Ausdehnungskoeffizienten von Tragkörper und Signalübertragungseinrichtung ausgleicht. Bei entsprechender Vorbehandlung von Tragkörper und Signalübertragungseinrichtung ergibt sich eine feste stoffschlüssige Verbindung der weiteren Dichtung an diesen Bauteilen, so dass eine Leckage und Fehlerströme zuverlässig vermieden werden. Dazu können der Tragkörper und die Medienleitung mit einem Bindemittel vorbehandelt sein. Das Bindemittel beispielsweise ein Silan oder Phenolharz verbessert die Bindung des Dichtungswerkstoffs an dem Tragkörper, wodurch die Dichtwirkung verbessert wird.

Die erste Ausnehmung und die zweite Ausnehmung können benachbart zueinander angeordnet sein. Dadurch können die Dichtung und die weitere Dichtung in einem Arbeitsschritt hergestellt werden. Die Herstellung der Dichtungen erfolgt vorzugsweise im Spritzgießverfahren.

Beide Stirnseiten des Tragkörpers können eine erste Ausnehmung aufweisen. Hierbei sind beide Stirnseiten mit einer Dichtung versehen. Beide Ausnehmungen sind über die weitere Ausnehmung miteinander verbunden, so dass alle drei Dichtungen in einem Arbeitsschritt hergestellt werden können. Die weitere Ausnehmung bildet dabei einen Überlauf durch den das Dichtungsmaterial in die beiden Ausnehmungen strömen kann.

Die Dichtung und die weitere Dichtung können materialeinheitlich und einstückig ausgebildet sein. Es ist kostengünstiger alle Dichtungen in einem Arbeitsschritt herzustellen und es verbessert sich die Dichtfunktion. Die Dichtungen können aber auch aus verschiedenen Elastomeren bestehen, die jeweils auf den Einsatzzweck abgestimmt sind. Die Dichtungen können auch aus verschiedenen Elastomeren oder auch mehrschichtig ausgebildet sein, wobei die einzelnen Schichten aus voneinander abweichenden Elastomeren bestehen können.

Der Tragkörper kann aus einem thermoplastischen Werkstoff gebildet sein. Formteile aus thermoplastischen Werkstoffen beispielsweise Polyamid oder Polypropylensulfid können kostengünstig im Spritzgießverfahren hergestellt werden. Der Tragkörper kann aber auch aus einem metallischen Werkstoff bestehen und als Spritzguss- oder Stanzteil ausgebildet sein.

Die Sensoranordnung ist insbesondere zur Verwendung in einem Kraftfahrzeugmotor geeignet. Dazu kann das Formteil als Flachdichtung ausgebildet sein. Das Formteil mit den integrierten Dichtungen bildet eine Dichtplatte durch die eine dichte Verbindung der Komponenten mit dem Gehäuse erfolgen kann. Die integrierte Sensoranordnung ermöglicht die Anordnung von Messwertübertragern die in das durch die Durchbrechung fließende Öl ragen und es können verschiedene Zustandsparameter, insbesondere Druck und Temperatur des Öls bestimmt werden und die Messwerte können leckagefrei zur Auswerteeinheit übertragen werden. Der Tragkörper kann auch rohrförmig ausgebildet sein, wobei der Tragkörper dann an seinem Außenumfang eine ringförmige Dichtung aufweist. Derartige Tragkörper werden zum Verbinden von Maschinenelementen mit kreisförmigen Ausnehmungen verwendet, wobei der Tragkörper in die Ausnehmungen gesteckt wird.

### Kurzbeschreibung der Zeichnung

Ein Ausführungsbeispiel der erfindungsgemäßen Sensoranordnung wird nachfolgend anhand der Figur näher erläutert. Diese zeigt schematisch:
Fig. 1 die erfindungsgemäße Sensoranordnung in der Draufsicht;
Fig. 2 die Sensoranordnung gemäß Figur 1 mit Dichtung.

### Ausführung der Erfindung

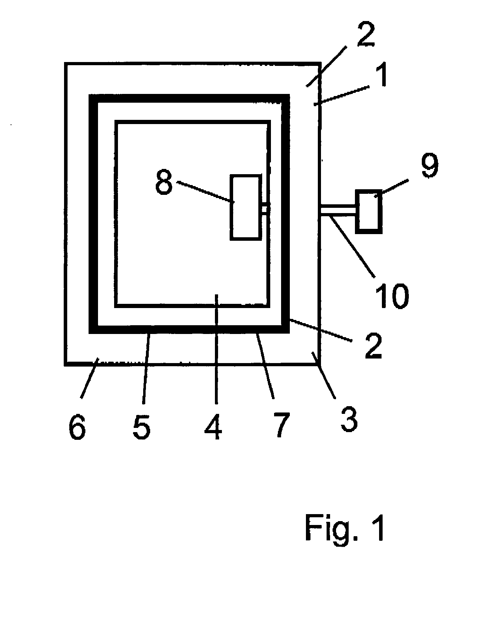

Figur 1 zeigt eine Sensoranordnung 1 zur Verwendung in einem Kraftfahrzeugmotor. Die Sensoranordnung 1 umfasst einen Messwertübertrager 8 und eine Auswerteeinheit 9 mit integriertem Sensor die durch eine Medienleitung 10, in dieser Ausführung ein Kupferrohr hydraulisch miteinander verbunden sind. Die Auswerteeinheit 9 mit Sensor ist als Drucksensor ausgebildet, wobei der Messwertübertrager 8 eine Druckmembran und aus Edelstahl besteht. Die Medienleitung 10 ist in einem Formteil 2 eingebettet, welches zur fluiddichten Verbindung von Maschinenelementen dient. Der Tragkörper 3 weist eine Durchbrechung 4 zum Durchführen von Medien, beispielsweise Motoröl auf. Der Tragkörper 3 ist ein Spritzgießteil und besteht aus einem thermoplastischen Werkstoff, hier Polyamid. Auf beiden Stirnseiten 6, 13 des Tragkörpers 3 sind erste Ausnehmungen angeordnet 5, welche mit einer Dichtung 7 versehen wird. Der Messwertübertrager 8 der Sensoranordnung 1 ist in der Durchbrechung 4 und die Auswerteeinheit 9 mit Sensor ist außerhalb des Formteils 2 angeordnet. In den Tragkörper 3 ist eine zweite Ausnehmung 11 eingebracht in der die Sensoranordnung 1 abschnittsweise, genauer die Medienleitung 10 angeordnet ist. Die zweite Ausnehmung 11 wird mit einer weiteren Dichtung 12 versehen, Beide Ausnehmungen 5, 11 sind benachbart zueinander angeordnet und sind wie auch die Medienleitung 10 mit einem Bindemittel vorbehandelt.

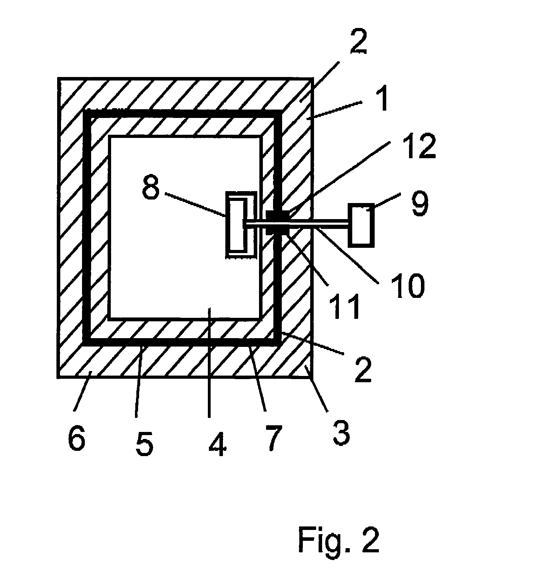

Figur 2 zeigt eine Sensoranordnung 1 gemäß Figur 1 bei dem die Ausnehmungen 5, 11 mit einem Dichtungswerkstoff ausgefüllt sind, so dass sich eine erste Dichtung 7 und eine zweite Dichtung 12 ergeben. Als Dichtungswerkstoff kommen elastomere, spritzgießfähige Werkstoffe, beispielsweise FKM oder NBR in Betracht. Der Dichtungswerkstoff bildet eine stoffschlüssige und damit dichte Verbindung zu dem Tragkörper 3 und der Medienleitung 10. Beide Dichtungen 7, 12 werden aufgrund der unmittelbaren Verbindung der Ausnehmungen 5, 11 in einem Arbeitsgang hergestellt und sind dadurch materialeinheitlich und einstückig ausgebildet. Das Formteil 2 ist als Flachdichtung ausgebildet ist.

## Patentansprüche

1. Sensoranordnung (1) mit einem Formteil (2) zum fluiddichten Verbinden von Maschinenelementen, umfassend einen Tragkörper (3) der eine Durchbrechung (4) zum Durchführen von Medien aufweist und eine erste Ausnehmung (5) die auf zumindest einer Stirnseite (6) des Tragkörpers (3) angeordnet ist und die mit einer Dichtung (7) versehen ist sowie einem Messwertübertrager (8) und einer Auswerteeinheit (9), **dadurch gekennzeichnet, dass** der Messwertübertrager (8) in der Durchbrechung (4) und die Auswerteeinheit (9) außerhalb des Formteils (2) angeordnet ist.

2. Sensoranordnung nach Anspruch 1, **dadurch gekennzeichnet, dass** die Sensoranordnung (1) als Drucksensor ausgebildet ist.

3. Sensoranordnung nach Anspruch 2, **dadurch gekennzeichnet, dass** der Messwertübertrager (8) als Druckmembran ausgebildet ist, der über eine in dem Formteil (2) eingebetteten Medienleitung (10) mit der Auswerteeinheit (9) hydraulisch verbunden ist.

4. Sensoranordnung nach einem der Ansprüche 1 bis 3, **dadurch gekennzeichnet, dass** der Tragkörper (3) eine zweite Ausnehmung (11) aufweist und dass die Sensoranordnung (1) abschnittsweise in der zweiten Ausnehmung (11) angeordnet ist und dass die zweite Ausnehmung (11) mit einer weiteren Dichtung (12) versehen ist.

5. Sensoranordnung nach einem der Ansprüche 1 bis 4, **dadurch gekennzeichnet, dass** die Ausnehmungen (5, 11) und die Medienleitung (10) mit einem Bindemittel versehen sind.

6. Sensoranordnung nach Anspruch 4 oder 5, **dadurch gekennzeichnet, dass** die erste Ausnehmung (5) und die zweite Ausnehmung (11) benachbart zueinander angeordnet sind.

7. Sensoranordnung nach einem der Ansprüche 1 bis 6, **dadurch gekennzeichnet, dass** beide Stirnseiten (6, 13) des Tragkörpers (3) eine erste Ausnehmung (5) aufweisen.

8. Sensoranordnung nach einem der Ansprüche 1 bis 7, **dadurch gekennzeichnet, dass** die Dichtung (7) und die weitere Dichtung (12) materialeinheitlich und einstückig ausgebildet sind.

9. Sensoranordnung nach einem der Ansprüche 1 bis 8, **dadurch gekennzeichnet, dass** der Tragkörper (3) aus einem thermoplastischen Werkstoff gebildet ist.

10. Sensoranordnung nach einem der Ansprüche 1 bis 9, **dadurch gekennzeichnet, dass** die Dichtung (7) und die weitere Dichtung (12) aus einem elastomeren Werkstoff gebildet sind.

11. Sensoranordnung nach einem der Ansprüche 1 bis 10, **dadurch gekennzeichnet, dass** das Formteil (2) als Flachdichtung oder als Rohr ausgebildet ist.

## Geänderte Patentansprüche

### Geänderte Patentansprüche gemäss Regel 137(2) EPÜ.

**1.** Sensoranordnung (1) mit einem Formteil (2) zum fluiddichten Verbinden von Maschinenelementen, umfassend einen Tragkörper (3) der eine Durchbrechung (4) zum Durchführen von Medien aufweist und eine erste Ausnehmung (5) die auf zumindest einer Stirnseite (6) des Tragkörpers (3) angeordnet ist und die mit einer Dichtung (7) versehen ist, einem Messwertübertrager (8) umfassend eine Signalübertragungseinrichtungen ausgebildet als Leiter oder Rohr die in dem Tragkörper eingebettet ist sowie einer Auswerteeinheit (9), wobei der Messwertübertrager (8) in der Durchbrechung (4) und die Auswerteeinheit (9) außerhalb des Formteils (2) angeordnet ist, **dadurch gekennzeichnet, dass** der Tragkörper (3) eine zweite Ausnehmung (11) aufweist und dass die Sensoranordnung (1) abschnittsweise in der zweiten Ausnehmung (11) angeordnet ist und dass die zweite Ausnehmung (11) mit einer weiteren Dichtung (12) versehen ist, wobei Tragkörper (3) und Messwertüberträger (8) so vorbehandelt sind, dass sich eine stoffschlüssige Verbindung mit der weiteren Dichtung (12) ergibt.

**2.** Sensoranordnung nach Anspruch 1, **dadurch gekennzeichnet, dass** die Sensoranordnung (1) als Drucksensor ausgebildet ist.

**3.** Sensoranordnung nach Anspruch 2, **dadurch gekennzeichnet, dass** der Messwertübertrager (8) als Druckmembran ausgebildet ist, der über eine in dem Formteil (2) eingebetteten Medienleitung (10) mit der Auswerteeinheit (9) hydraulisch verbunden ist.

**4.** Sensoranordnung nach einem der Ansprüche 1 bis 4, **dadurch gekennzeichnet, dass** die Ausnehmungen (5, 11) und die Medienleitung (10) mit einem Bindemittel versehen sind.

**5.** Sensoranordnung nach Anspruch 1 oder 4, **dadurch gekennzeichnet, dass** die erste Ausnehmung (5) und die zweite Ausnehmung (11) benachbart zueinander angeordnet sind.

**6.** Sensoranordnung nach einem der Ansprüche 1 bis 5, **dadurch gekennzeichnet, dass** beide Stirnseiten (6, 13) des Tragkörpers (3) eine erste Ausnehmung (5) aufweisen.

**7.** Sensoranordnung nach einem der Ansprüche 1 bis 6, **dadurch gekennzeichnet, dass** die Dichtung (7) und die weitere Dichtung (12) materialeinheitlich und einstückig ausgebildet sind.

**8.** Sensoranordnung nach einem der Ansprüche 1 bis 7, **dadurch gekennzeichnet, dass** der Tragkörper (3) aus einem thermoplastischen Werkstoff gebildet ist.

**9.** Sensoranordnung nach einem der Ansprüche 1 bis 8, **dadurch gekennzeichnet, dass** die Dichtung (7) und die weitere Dichtung (12) aus einem elastomeren Werkstoff gebildet sind.

**10.** Sensoranordnung nach einem der Ansprüche 1 bis 9, **dadurch gekennzeichnet, dass** das Formteil (2) als Flachdichtung oder als Rohr ausgebildet ist.
